# EUROPEAN PATENT APPLICATION

(11) **EP 4 664 088 A1**
(43) Date of publication of application: **17.12.2025**
(21) Application number: 24753147.8
(22) Date of filing: 25.01.2024
(51) Int. Cl.: G01M 13/00, G01H 17/00, G01N 27/02, G01N 35/02

(54) **ABNORMALITY DETECTION METHOD FOR ULTRASONIC VIBRATOR**

(30) Priority: 10.02.2023 JP 2023019060
(71) Applicant: HITACHI HIGH-TECH CORPORATION, Tokyo 105-6409 (JP)
(72) Inventor: TAKAHASHI, Kaisei, Tokyo 105-6409 (JP); TANAKA, Yuto, Tokyo 105-6409 (JP); ZHOU, Guangbin, Tokyo 105-6409 (JP)
(74) Representative: Strehl & Partner mbB
(86) International application number: PCT/JP2024/002274
(87) International publication number: WO 2024/166703

(57) **Abstract**

An object of the invention is to accurately detect abnormality of an ultrasonic vibrator and reduce erroneous detection. A method for detecting an abnormality of an ultrasonic vibrator of the invention includes: a first step of calculating a frequency characteristic of admittance of the ultrasonic vibrator; a second step of calculating, based on the frequency characteristic of the admittance obtained in the first step, a resonance frequency at which the admittance is a maximum value and a frequency width at which a value at a predetermined ratio to the maximum value is obtained; a third step of calculating sharpness based on the resonance frequency and the frequency width obtained in the second step; and a fourth step of determining an abnormality of the ultrasonic vibrator based on the sharpness calculated in the third step.

## Description

### Technical Field

The present invention relates to a method for detecting an abnormality of an ultrasonic vibrator.

### Background Art

When analyzing components of a specimen such as serum or urine, an ultrasonic vibrator may be used as a stirring mechanism that mixes the specimen and a reagent. In a non-contact stirring technique using an ultrasonic vibrator, a medium such as a stirring rod is not used, and carryover in which a specimen or a reagent attached to the medium affects a next analysis result can be avoided. It is necessary to check whether an operation of the stirring mechanism using such an ultrasonic vibrator is normal, similarly to other mechanisms.

For example, PTL 1 discloses an electrical impedance spectrum measuring device for detecting a state of an ultrasonic vibrator before the ultrasonic vibrator is operated. In the related art such as PTL 1, impedance of the ultrasonic vibrator is measured, and a minimum value thereof, that is, an absolute value of the impedance at a resonance frequency is compared with a threshold to detect an abnormality of the ultrasonic vibrator.

### Citation List

### Patent Literature

PTL 1: JP2021-196329A

### Summary of Invention

### Technical Problem

However, the threshold used when performing abnormality detection with the minimum value of the impedance has a narrow settable range, and there is a limit in reducing erroneous detection.

An object of the invention is to accurately detect an abnormality of an ultrasonic vibrator and reduce erroneous detection.

### Solution to Problem

A method for detecting an abnormality of an ultrasonic vibrator according to the invention includes: a first step of calculating a frequency characteristic of admittance of the ultrasonic vibrator; a second step of calculating, based on the frequency characteristic of the admittance obtained in the first step, a resonance frequency at which the admittance is a maximum value and a frequency width at which a value at a predetermined ratio to the maximum value is obtained; a third step of calculating sharpness based on the resonance frequency and the frequency width obtained in the second step; and a fourth step of determining an abnormality of the ultrasonic vibrator based on the sharpness calculated in the third step.

### Advantageous Effects of Invention

According to the invention, it is possible to accurately detect an abnormality of an ultrasonic vibrator and reduce erroneous detection.

### Brief Description of Drawings

[FIG. 1] FIG. 1 is a schematic configuration diagram of an automatic analyzer.
[FIG. 2] FIG. 2 is a diagram showing a configuration of a stirring mechanism and a power amplifier and an impedance measurement circuit that are connected to the stirring mechanism.
[FIG. 3] FIG. 3 is a graph showing a result of measuring a frequency characteristic of impedance of a normal ultrasonic vibrator by the impedance measurement circuit.
[FIG. 4] FIG. 4 is a graph showing a result of calculating the frequency characteristic of admittance of the normal ultrasonic vibrator by a host computer.
[FIG. 5] FIG. 5 is a graph showing a result of measuring the frequency characteristic of the impedance of an abnormal ultrasonic vibrator by the impedance measurement circuit.
[FIG. 6] FIG. 6 is a graph showing a result of calculating the frequency characteristic of the admittance of the abnormal ultrasonic vibrator by the host computer.
[FIG. 7] FIG. 7 is a graph showing a result of calculating the frequency characteristic of the admittance of a more abnormal ultrasonic vibrator (as compared with that of the case in FIG. 6) by the host computer.
[FIG. 8] FIG. 8 is a flowchart showing a flow of detecting an abnormality of the ultrasonic vibrator.
[FIG. 9] FIG. 9 is a graph showing a result of calculating a frequency characteristic of admittance of an abnormal ultrasonic vibrator by a host computer according to Embodiment 2.
[FIG. 10] FIG. 10 is a graph showing a result of calculating a frequency characteristic of admittance of a normal ultrasonic vibrator by a host computer according to Embodiment 3.
[FIG. 11] FIG. 11 is a diagram showing an outline of a configuration of an impedance measuring device according to Embodiment 4.

### Description of Embodiments

Embodiments of the invention will be described below.

### Embodiment 1

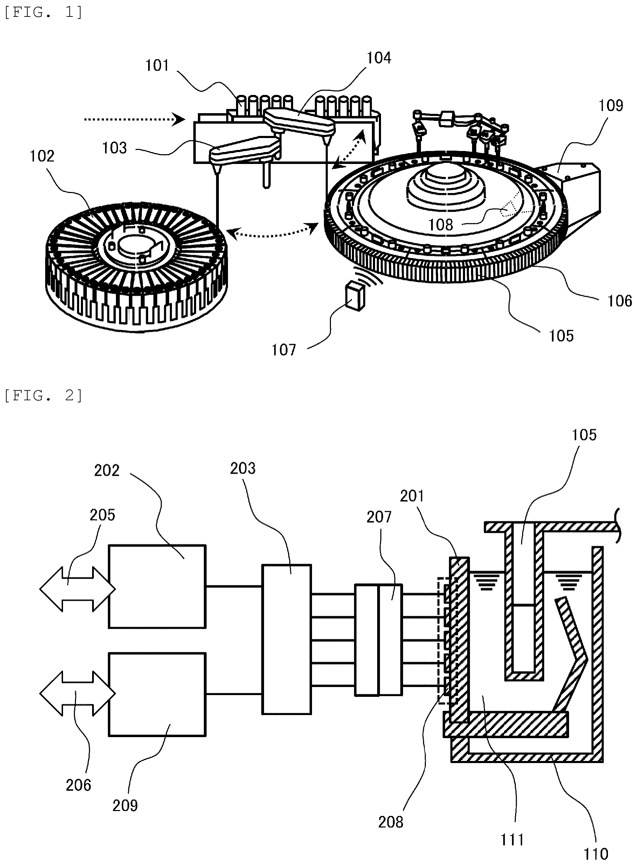

In Embodiment 1, an example of an automatic analyzer having a function of detecting an abnormality of an ultrasonic vibrator will be described. FIG. 1 is a schematic configuration diagram of the automatic analyzer. As shown in FIG. 1, the automatic analyzer includes a specimen dispensing mechanism 104, a reagent dispensing mechanism 103, a reaction disk 106, a stirring mechanism 107, a light source 108, and an absorption spectrometer 109.

The specimen dispensing mechanism 104 dispenses a specimen to be analyzed from a specimen container 101 containing the specimen into a reaction container 105. The reagent dispensing mechanism 103 dispenses a reagent from a reagent bottle 102 (reagent container) containing the reagent into the reaction container 105. The reaction disk 106 is rotatable, and reaction containers 105 are circumferentially arranged on an upper surface thereof. The stirring mechanism 107 stirs, in a non-contact manner, a liquid mixture (reaction liquid) of the specimen and the reagent dispensed into the reaction container 105. The light source 108 irradiates the liquid mixture, in which a reaction is promoted by stirring, with light. The absorption spectrometer 109 measures absorbance characteristics of the liquid mixture.

After the measurement of the absorbance characteristics, the reaction container 105 is cleaned by a cleaning mechanism (not shown) and is repeatedly used in a next reaction. Further, probes of the specimen dispensing mechanism 104 and the reagent dispensing mechanism 103 are cleaned by a cleaning tank (not shown).

Although omitted in FIG. 1, the automatic analyzer also includes a host computer. The host computer exchanges signals with the specimen dispensing mechanism 104, the reagent dispensing mechanism 103, the reaction disk 106, the stirring mechanism 107, and the like, and controls operations thereof. The host computer includes a calculation unit that performs calculation, a storage unit that stores information, and a communication unit that transmits and receives information. The calculation unit is, for example, a processor, the storage unit is, for example, a semiconductor memory or a magnetic disk device, and the communication unit is, for example, a network interface. The host computer may include a keyboard and a mouse as input devices that input information, and a display device and a printer as output devices that output information.

FIG. 2 is a diagram showing a configuration of a stirring mechanism and a power amplifier and an impedance measurement circuit that are connected to the stirring mechanism. In FIG. 2, a cross section of the stirring mechanism is a cross section including the stirring mechanism 107 and parallel to a radial direction of the reaction disk 106 and a vertical direction in FIG. 1. On the other hand, a portion connected to the host computer side with respect to the stirring mechanism in FIG. 2 shows a schematic electric circuit.

The reaction disk 106 includes a thermostatic tank 110 that holds thermostatic water 111 at a specified temperature, and the reaction container 105 is kept at a predetermined temperature by the thermostatic water 111 circulating in the thermostatic tank 110 contacting the reaction container 105. The stirring mechanism 107 stirs the liquid mixture in a non-contact manner by applying sound waves to the reaction container 105. In the embodiment, the thermostatic water is used as a liquid medium for sound waves, and water other than the thermostatic water or a liquid other than the water may also be used.

The stirring mechanism 107 includes an ultrasonic vibrator 201 (piezoelectric element) that generates ultrasonic waves, split electrodes 208 (a plurality of electrodes) provided on a surface of the ultrasonic vibrator 201, and a connector 207 that electrically connects the split electrodes 208, a power amplifier 202, and the like.

The ultrasonic vibrator 201 is disposed such that one surface (air-side surface) thereof is in contact with air and the other surface (thermostatic water-side surface) thereof is in contact with the thermostatic water 111. The split electrodes 208 are disposed on the air-side surface. The split electrodes 208 are split as a plurality of electrodes at different height positions as surrounded by a broken line frame in FIG. 2. In the embodiment, although 14 split electrodes 208 are provided (only some of the split electrodes are shown in FIG. 2), the number of split electrodes 208 is not limited to 14. Dimensions and shapes of the respective split electrodes 208 can be individually and freely designed, and in the embodiment, first to thirteenth split electrodes 208 from the top have the same shape, and only a fourteenth (the lowermost) split electrode 208 is formed to be slightly longer than the other split electrodes 208. The split electrodes 208 are connected to pins on one end of the connector 207 in one-to-one correspondence. The other end of the connector 207 is connected to the power amplifier 202 or an impedance measurement circuit 209 via a relay group 203.

The power amplifier 202 drives the ultrasonic vibrator 201 to generate ultrasonic waves by applying a voltage to each electrode. The power amplifier 202 is provided with a first communication unit 205, and the host computer controls the power amplifier 202 via the first communication unit 205.

The relay group 203 includes a plurality of switches, and opening and closing of each switch is controlled in accordance with a command from the host computer. That is, the relay group 203 functions as a switch that switches connection between the power amplifier 202 and the split electrodes 208. For example, the host computer selects one or more split electrodes 208 at appropriate positions in accordance with a liquid level position of the liquid mixture in the reaction container 105, and controls the relay group 203 to apply a voltage to the selected split electrode 208. In this way, a position at which the reaction container 105 is applied with ultrasonic waves is adjusted.

The relay group 203 also includes a switch for switching between connecting the ultrasonic vibrator 201 and the power amplifier 202 and connecting the ultrasonic vibrator 201 and the impedance measurement circuit 209 in accordance with a command from the host computer. That is, the relay group 203 connects the power amplifier 202 and the ultrasonic vibrator 201 during a stirring operation, and connects the impedance measurement circuit 209 and the ultrasonic vibrator 201 during impedance measurement.

The impedance measurement circuit 209 measures a frequency characteristic of impedance of the ultrasonic vibrator 201. The frequency characteristic of the impedance of the ultrasonic vibrator 201 is represented by, for example, a set of frequency characteristics of the impedance related to the split electrodes 208. Similarly, the impedance measurement circuit 209 is provided with a second communication unit 206, and the host computer controls the impedance measurement circuit 209 via the second communication unit 206. The impedance measurement circuit 209 transmits a measurement result about the frequency characteristic of the impedance to the host computer via the second communication unit 206. The impedance measurement circuit 209 does not need to be implemented independently of the host computer as shown in FIG. 2, and may be integrated into the host computer.

The host computer, which receives the frequency characteristics of the impedance of the ultrasonic vibrator 201 from the impedance measurement circuit 209, detects whether the ultrasonic vibrator 201 is normal or abnormal by the following calculation.

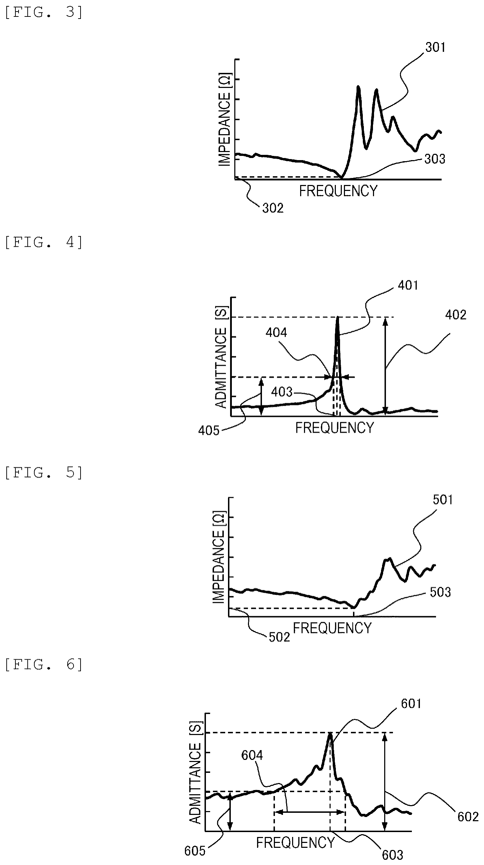

FIG. 3 is a graph showing a result of measuring a frequency characteristic of the impedance of a normal ultrasonic vibrator by the impedance measurement circuit. In FIG. 3, a waveform 301 of absolute values of the measured impedance is plotted, and a horizontal axis represents a drive frequency and a vertical axis represents the impedance. A frequency at which the absolute value of the impedance is a minimum value 302 is a resonance frequency 303 of the ultrasonic vibrator. It is considered that the ultrasonic vibrator vibrates more greatly at this frequency than when driven at other frequencies.

FIG. 4 is a graph showing a result of calculating a frequency characteristic of admittance of a normal ultrasonic vibrator by the host computer. In FIG. 4, a waveform 401 of calculated admittance is plotted, and a horizontal axis represents a drive frequency and a vertical axis represents the admittance. A frequency at which the admittance is a maximum value 402 is a resonance frequency 403 of the ultrasonic vibrator. The admittance of the ultrasonic vibrator is calculated by the host computer normalizing the impedance measured by the impedance measurement circuit 209 (dividing by a characteristic impedance) and taking a reciprocal thereof.

A frequency width 404 of the waveform 401 shown in FIG. 4 is a width of frequencies at which a predetermined ratio value 405 is obtained by multiplying the maximum value 402 by a predetermined ratio. Here, a value smaller than 1/√2 times is set as the predetermined ratio. Sharpness Q' of the waveform 401 is calculated by dividing the resonance frequency 403 by the frequency width 404. In the case of a waveform of a normal ultrasonic vibrator, when the predetermined ratio is set to, for example, 0.3 times, the sharpness Q' is about 30 to 230.

In the present specification, the sharpness Q' is defined as a value calculated based on a frequency width at which a predetermined ratio value smaller than 1/√2 times the maximum value is obtained, and is distinguished from a Q value calculated based on a frequency width (half width) when the ratio value is 1/√2 times the maximum value.

FIG. 5 is a graph showing a result of measuring a frequency characteristic of the impedance of an abnormal ultrasonic vibrator by the impedance measurement circuit. In FIG. 5, a waveform 501 of absolute values of the measured impedance is plotted, and a horizontal axis represents a drive frequency and a vertical axis represents the impedance. A frequency at which the absolute value of the impedance is a minimum value 502 is a resonance frequency 503 of the ultrasonic vibrator.

The minimum value 502 of the impedance in the waveform 501 is larger than the minimum value 302 of the impedance in the waveform 301, and a current hardly flows. That is, the ultrasonic vibrator having a measurement result such as the waveform 501 has lower piezoelectricity (application intensity of ultrasonic waves) than the ultrasonic vibrator having a measurement result such as the waveform 301, and can be regarded as abnormal. Therefore, it is also possible, to some extent, to determine whether the ultrasonic vibrator is abnormal by comparing the minimum value of the impedance with a predetermined threshold. However, a settable range of the threshold used in the case of performing the determination using the minimum value of the impedance is narrow, and there is a limit in reducing erroneous determination. For example, if the threshold is reduced in order to reduce the number of cases in which an abnormal ultrasonic vibration element is erroneously determined to be normal, a certain number of cases in which a normal ultrasonic vibrator is erroneously determined to be abnormal occur.

FIG. 6 is a graph showing a result of calculating a frequency characteristic of admittance of the abnormal ultrasonic vibrator by the host computer. In FIG. 6, a waveform 601 of calculated admittance is plotted, and a horizontal axis represents a drive frequency and a vertical axis represents the admittance. A frequency at which the admittance is a maximum value 602 is a resonance frequency 603 of the ultrasonic vibrator.

A frequency width 604 of the waveform 601 shown in FIG. 6 is a width of frequencies at which a predetermined ratio value 605 is obtained by multiplying the maximum value 602 by a predetermined ratio. The sharpness Q' of the waveform 601 is calculated by dividing the resonance frequency 603 by the frequency width 604. In the case of the waveform of the abnormal ultrasonic vibrator, when the predetermined ratio is set to, for example, 0.3 times, the sharpness Q' cannot be calculated in 90% or more of the ultrasonic vibrators, and can be calculated in less than 10% of the ultrasonic vibrators, but the sharpness Q' is about 30 at the maximum.

As described above, it is possible to perform abnormality detection with higher accuracy than the determination using the Q value calculated based on an abnormality. For example, according to the determination method of the embodiment using the sharpness Q', for a waveform in which only the vicinity of a peak (the vicinity of the resonance frequency) is sharp as shown in FIG. 6, an abnormality can be determined.

Here, specific examples of a method of comparing the sharpness Q' with the threshold will be described.

A first example is a statistical comparison method. In this method, first, the sharpness Q' obtained from a large number of normal ultrasonic vibrators is collected, and a statistical population of the sharpness Q' is constructed. Next, a normal range (threshold) based on a standard deviation σ is defined around an average value of the population.

For example, an average of -3σ or more is defined as the normal range. Thereafter, the host computer calculates the sharpness Q' of the ultrasonic vibrator to be determined, and compares a calculation result with the predefined normal range. If the calculation result is within the normal range, the ultrasonic vibrator is determined to be normal, and if the calculation result is out of the normal range, the ultrasonic vibrator is determined to be abnormal.

A second example is a comparison method using machine learning. In this method, first, a trained model is constructed by causing a learning model to perform machine learning using sharpness Q' obtained from a large number of normal ultrasonic vibrators as training data. Thereafter, when the host computer calculates the sharpness Q' of the ultrasonic vibrator to be determined, the host computer inputs a calculation result to the trained model and causes the trained model to output whether the sharpness Q' deviates from a normal range (threshold) of the sharpness Q'.

In either of the comparison methods described above, the normal range (threshold) set in advance may vary depending on the type of ultrasonic vibrator. For example, data about the sharpness Q' collected in advance may be distinguished by whether the material of the ultrasonic vibrator is PZT (lead zirconate titanate) or the like containing lead or whether the material of the ultrasonic vibrator is lithium niobate (LN) or the like not containing lead.

Further, the abnormality determination may be performed by multivariate analysis in which not only the sharpness Q' but also one or more of other feature values obtained at the stage of calculating the sharpness Q', for example, a resonance frequency, a phase, an absolute value of admittance, and an absolute value of impedance are combined. The use of multivariate analysis enables more accurate abnormality detection.

Next, an abnormality detection method in a case where a degree of abnormality of the ultrasonic vibrator is even higher and it is difficult to calculate the above-described sharpness Q' itself will be described.

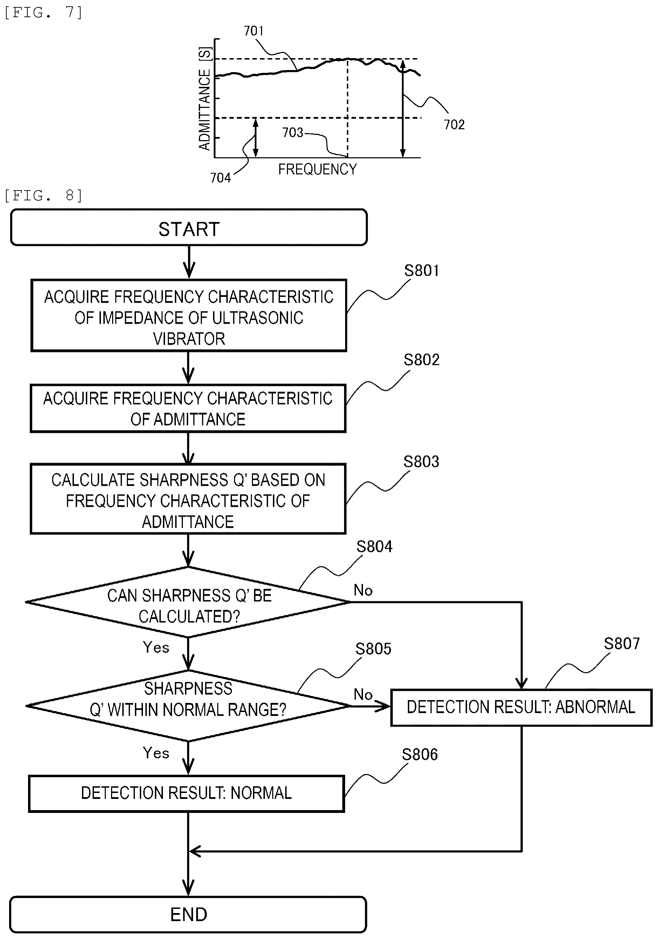

FIG. 7 is a graph showing a result of calculating a frequency characteristic of admittance of a more abnormal ultrasonic vibrator (as compared with the case in FIG. 6) by the host computer. In FIG. 7, a waveform 701 of calculated admittance is plotted, and a horizontal axis represents a drive frequency and a vertical axis represents the admittance. A frequency at which the admittance is a maximum value 702 is a resonance frequency 703 of the ultrasonic vibrator.

In the waveform 701 shown in FIG. 7, since there is no frequency at which a predetermined ratio value 704 is obtained by multiplying the maximum value 702 by a predetermined ratio, and a frequency width cannot be calculated, the sharpness Q' cannot be calculated either. Therefore, the above-described abnormality detection method using the sharpness Q' cannot be applied.

Here, the situation where the sharpness Q' cannot be calculated is considered to be caused by a fact that the vibration does not greatly change at the resonance frequency 703 and other frequencies, and a sharp resonance component is not included in the frequency characteristic of the admittance. The absence of a sharp resonance component means that piezoelectricity (application intensity of ultrasonic waves) is reduced. If the frequency width is calculated based on a predetermined ratio value larger than 1/√2 times the maximum value 702, obtained sharpness Q" for the waveform 701 shown in FIG. 7 is lower than sharpness Q" obtained by the same method for a waveform of a normal ultrasonic vibrator (for example, the waveform 401 shown in FIG. 4). That is, when the sharpness Q' cannot be calculated as in the waveform 701 shown in FIG. 7, the ultrasonic vibrator can be regarded as abnormal.

FIG. 8 is a flowchart showing a flow of abnormality detection of the ultrasonic vibrator.

First, the impedance measurement circuit 209 applies a voltage, under which frequency sweeping is performed within a range of 1.500 MHz to 1.700 MHz, to the electrodes of the ultrasonic vibrator under the control of the host computer. At this time, the impedance measurement circuit 209 acquires a frequency characteristic of impedance, which is a ratio of a voltage to a measured current, of the ultrasonic vibrator by calculating the impedance (step S801), and transmits the frequency characteristic to the host computer.

Next, the host computer acquires a frequency characteristic of admittance, which is a reciprocal of the impedance, of the ultrasonic vibrator by calculating the admittance based on the received frequency characteristic of the impedance (step S802).

Thereafter, the host computer calculates a resonance frequency, at which the admittance is a maximum value, based on the acquired frequency characteristic of the admittance, and calculates a frequency width at which a predetermined ratio value is obtained by multiplying the maximum value by a predetermined ratio smaller than 1/√2 times. Further, the host computer calculates the sharpness Q' by dividing the resonance frequency by the frequency width (step S803).

Here, the host computer determines whether the calculation of the sharpness Q' in step S803 is possible (step S804). If it is determined that the calculation is impossible, the host computer outputs "abnormal" as a detection result for the ultrasonic vibrator (step S807).

If it is determined in step S804 that the calculation is possible, the host computer determines whether the sharpness Q' is within a normal range (step S805). If it is determined to be out of the normal range, the host computer outputs "abnormal" as the detection result for the ultrasonic vibrator (step S807).

If it is determined to be within the normal range in step S805, the host computer outputs "normal" as the detection result for the ultrasonic vibrator (step S806).

### Embodiment 2

Embodiment 2 is an example of an automatic analyzer having a function of detecting an abnormality of an ultrasonic vibrator by calculating a plurality of values of sharpness Q' from the same waveform and comparing each value of the sharpness Q' with a threshold.

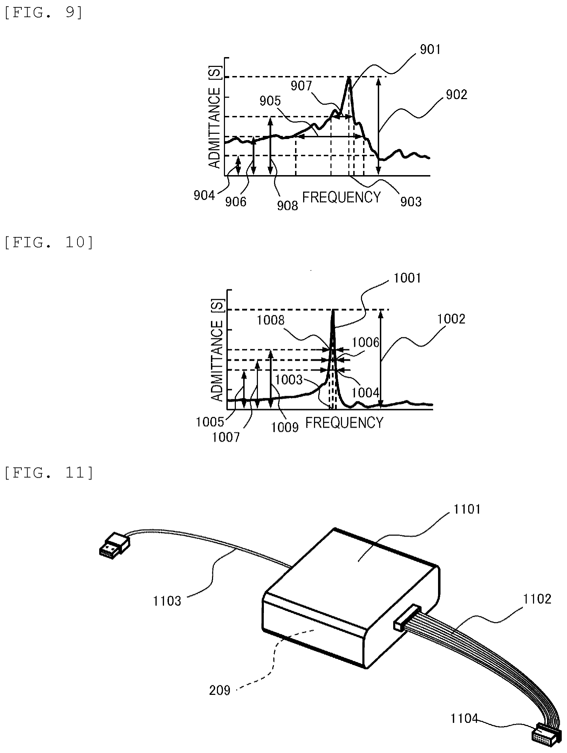

FIG. 9 is a graph showing a result of calculating a frequency characteristic of admittance of an abnormal ultrasonic vibrator by a host computer according to Embodiment 2. In FIG. 9, a waveform 901 of calculated admittance is plotted, and a horizontal axis represents a drive frequency and a vertical axis represents the admittance. A frequency at which the admittance is a maximum value 902 is a resonance frequency 903 of the ultrasonic vibrator.

The waveform 901 shown in FIG. 9 is the same as the waveform 601 shown in FIG. 6, but reference signs of the maximum value and the resonance frequency are different between FIG. 9 and FIG. 6 for convenience.

In the embodiment, as frequency widths of the waveform 901, calculation of a first frequency width for 0.20 times the maximum value 902, a second frequency width for 0.40 times the maximum value 902, and a third frequency width for 0.60 times the maximum value 902 is attempted. The first frequency width cannot be calculated since a frequency, at which a predetermined ratio value 904 that is 0.20 times the maximum value 902 is obtained, is not present on the side smaller than the resonance frequency. The second frequency width is calculated as a frequency width 905 since frequencies, at which a predetermined ratio value 906 that is 0.40 times the maximum value 902 is obtained, are present on both sides of the resonance frequency. The third frequency width is calculated as a frequency width 907 since frequencies, at which a predetermined ratio value 908 that is 0.60 times the maximum value 902 is obtained, are present on both sides of the resonance frequency.

Next, calculation of the sharpness Q' is attempted for each frequency width. The sharpness Q' corresponding to the first frequency width cannot be calculated since the first frequency width itself cannot be calculated. The sharpness Q' corresponding to the second frequency width is calculated by dividing the resonance frequency 903 by the frequency width 905. Further, the sharpness Q' corresponding to the third frequency width is calculated by dividing the resonance frequency 903 by the frequency width 907.

Thereafter, each value of the sharpness Q' is compared with the threshold. Here, the threshold can be set to a different value for each value of the sharpness Q'. The method of comparing the sharpness Q' with the threshold is the same as that in Embodiment 1. As an example of the comparison result, the sharpness Q' itself cannot be calculated by the predetermined ratio value 904 that is 0.20 times the maximum value, the sharpness Q' is out of the normal range by the predetermined ratio value 906 that is 0.40 times the maximum value, and the sharpness Q' is within the normal range by the predetermined ratio value 908 that is 0.60 times the maximum value.

As described, the comparison result of the sharpness Q' and the threshold varies depending on what ratio is multiplied by the maximum value of admittance. This is because an abnormal ultrasonic vibrator has high impedance in the vicinity of a resonance point and low impedance in the vicinity of an antiresonance point as compared with a normal ultrasonic vibrator, and thus, when the waveform of the admittance is used, it tends to take a flattened shape where the minimum value is elevated.". Therefore, the admittance value (the ratio by which the maximum value is multiplied) set for calculating the frequency width is likely to be out of the normal range when being small, and is likely to be within the normal range when being large. Therefore, in the embodiment, by calculating a plurality of values of the sharpness Q' from the same waveform and comparing each value of the sharpness Q' with a threshold, it is possible not only to detect the abnormality itself of the ultrasonic vibrator but also to accurately detect the degree of abnormality. In addition, by accumulating data about calculated values of the sharpness Q' and checking a temporal change, it is also easier to grasp a sign of an abnormality or failure of the ultrasonic vibrator than in Embodiment 1.

Although the calculation of the sharpness Q' is attempted based on the frequency widths at which values that are 0.20 times, 0.40 times, and 0.60 times the maximum value of the admittance are obtained in the embodiment, the ratio by which the maximum value is multiplied is not limited thereto. Further, although the case of attempting to calculate three values of the sharpness Q' from the same waveform has been described as an example in the embodiment, the number of values of the sharpness Q' to be calculated is not limited to three.

### Embodiment 3

In a third embodiment, an example of an automatic analyzer having a function of calculating a plurality of values of sharpness Q' from the same waveform and detecting an abnormality of an ultrasonic vibrator based on a ratio of the values of the sharpness Q' will be described.

FIG. 10 is a graph showing a result of calculating a frequency characteristic of admittance of a normal ultrasonic vibrator by a host computer according to Embodiment 3. In FIG. 10, a waveform 1001 of calculated admittance is plotted, and a horizontal axis represents a drive frequency and a vertical axis represents the admittance. A frequency at which the admittance is a maximum value 1002 is a resonance frequency 1003 of the ultrasonic vibrator. The waveform 1001 shown in FIG. 10 is the same as the waveform 401 shown in FIG. 4, but reference signs of the maximum value and the resonance frequency are different between FIG. 10 and FIG. 4 for convenience.

In the embodiment, as frequency widths of the waveform 1001, calculation of a first frequency width for 0.40 times the maximum value 1002, a second frequency width for 0.50 times the maximum value 1002, and a third frequency width for 0.60 times the maximum value 1002 is attempted. The first frequency width is calculated as a frequency width 1004 since frequencies, at which a predetermined ratio value 1005 that is 0.40 times the maximum value 1002 is obtained, are present on both sides of the resonance frequency.

The second frequency width is calculated as a frequency width 1006 since frequencies, at which a predetermined ratio value 1007 that is 0.50 times the maximum value 1002 is obtained, are present on both sides of the resonance frequency. The third frequency width is calculated as a frequency width 1008 since frequencies, at which a predetermined ratio value 1009 that is 0.60 times the maximum value 1002 is obtained, are present on both sides of the resonance frequency.

Next, sharpness is calculated for each frequency width. The sharpness Q' corresponding to the first frequency width is calculated by dividing the resonance frequency 1003 by the frequency width 1004. The sharpness Q' corresponding to the second frequency width is calculated by dividing the resonance frequency 1003 by the frequency width 1006. Further, the sharpness Q' corresponding to the third frequency width is calculated by dividing the resonance frequency 1003 by the frequency width 1008.

Thereafter, a ratio of values of the sharpness Q' is calculated, and whether the ultrasonic vibrator is normal or abnormal is detected based on the calculated ratio. For example, in the case in FIG. 10, the ratio of the values of the sharpness Q' calculated based on the frequency widths, at which values that are 0.40 times, 0.50 times, and 0.60 times the maximum value of the admittance are obtained, is approximately 1:1.3:1.6. That is, in a normal ultrasonic vibrator, a sharp resonance characteristic is obtained, and the sharpness Q' calculated based on the frequency width 1004, at which the predetermined ratio value 1005 that is 0.40 times the maximum value of the admittance is obtained, is also relatively high.

Therefore, in a normal ultrasonic vibrator, even when the ratio by which the maximum value is multiplied is changed, a large difference does not occur in the ratio of the values of the sharpness Q'.

On the other hand, in an abnormal ultrasonic vibrator, since the sharpness of the waveform decreases, the sharpness Q' tends to be significantly lower as the ratio by which the maximum value is multiplied is smaller. For example, in the case of the waveform of an abnormal ultrasonic vibrator as shown in FIG. 6 or 9, a ratio of values of the sharpness Q' calculated based on the frequency widths, at which values that are 0.40 times, 0.50 times, and 0.60 times the maximum value of the admittance are obtained, is approximately 1:2.3:5.1.

### Embodiment 4

In each of the embodiments described above, the frequency characteristic of the impedance is measured by the impedance measurement circuit 209 built in the automatic analyzer, but in Embodiment 4, the frequency characteristic of the impedance is measured by an impedance measuring device attached to the automatic analyzer. The impedance measuring device of Embodiment 4 is attached to the stirring mechanism 107 of the automatic analyzer by a service person or the like during maintenance of an ultrasonic vibrator. Specifically, in place of the power amplifier 202 system, the impedance measuring device is attached to the other end of the connector 207 whose one end is connected to the split electrodes 208.

FIG. 11 is a diagram showing an outline of a configuration of the impedance measuring device according to Embodiment 4. As shown in FIG. 11, the impedance measuring device includes a portable case 1101, the impedance measurement circuit 209, an ultrasonic vibrator side connection cable 1102, and a host computer side connection cable 1103. The impedance measurement circuit 209 is built in the portable case 1101. The impedance measurement circuit 209 measures a frequency characteristic of the impedance of the ultrasonic vibrator 201. The ultrasonic vibrator side connection cable 1102 electrically connects, via the connector 207, the impedance measurement circuit 209 and the split electrodes 208 of the ultrasonic vibrator to be measured. A cable end 1104 of the ultrasonic vibrator side connection cable 1102 may have any configuration as long as the cable end 1104 can be electrically connected to the split electrodes 208 of the ultrasonic vibrator. The host computer side connection cable 1103 connects the impedance measurement circuit 209 and the host computer.

The impedance measurement circuit 209 transmits the frequency characteristic of the impedance measured via the ultrasonic vibrator side connection cable 1102 to the host computer via the host computer side connection cable 1103. Wireless communication may be used for the connection between the impedance measurement circuit 209 and the host computer instead of the host computer side connection cable 1103 that is a wired cable. In the host computer, abnormality detection of the ultrasonic vibrator is performed by the same method as in each of the embodiments described above.

The host computer can have the same configuration as that in each of the embodiments described above, but is not necessarily mounted on the automatic analyzer, and may be provided separately from the automatic analyzer. In addition, a part or all of calculation functions of the host computer may be provided on the impedance measuring device, and the impedance measuring device may not only measure the frequency characteristic of the impedance but also perform abnormality detection of an ultrasonic vibration element. In this case, the impedance measuring device is further provided with an input unit and an output unit, and can be regarded as an abnormality detector.

The invention is not limited to the embodiments described above, and includes various modifications. For example, although the ultrasonic vibrator provided for the stirring mechanism has been described in each of the embodiments described above, in a case where the ultrasonic vibrator is used for the cleaning mechanism, the ultrasonic vibrator of the cleaning mechanism can be the same. In this case, a threshold set in advance or data collected for setting the threshold may be different depending on whether the ultrasonic vibrator is applied to the stirring mechanism or the cleaning mechanism.

### Reference Signs List

- 101:: specimen container
- 102:: reagent bottle
- 103:: reagent dispensing mechanism
- 104:: specimen dispensing mechanism
- 105:: reaction container
- 106:: reaction disk
- 107:: stirring mechanism
- 108:: light source
- 109:: absorption spectrometer
- 110:: thermostatic tank
- 111:: thermostatic water
- 201:: ultrasonic vibrator
- 202:: power amplifier
- 203:: relay group
- 205:: first communication unit
- 206:: second communication unit
- 207:: connector
- 208:: split electrode
- 209:: impedance measurement circuit
- 301:: waveform
- 302:: minimum value
- 303:: resonance frequency
- 401:: waveform
- 402:: maximum value
- 403:: resonance frequency
- 404:: frequency width
- 405:: predetermined ratio value
- 501:: waveform
- 502:: minimum value
- 503:: resonance frequency
- 601:: waveform
- 602:: maximum value
- 603:: resonance frequency
- 604:: frequency width
- 605:: predetermined ratio value
- 701:: waveform
- 702:: maximum value
- 703:: resonance frequency
- 704:: predetermined ratio value
- 901:: waveform
- 902:: maximum value
- 903:: resonance frequency
- 904:: predetermined ratio value
- 905:: frequency width
- 906:: predetermined ratio value
- 907:: frequency width
- 908:: predetermined ratio value
- 1001:: waveform
- 1002:: maximum value
- 1003:: resonance frequency
- 1004:: frequency width
- 1005:: predetermined ratio value
- 1006:: frequency width
- 1007:: predetermined ratio value
- 1008:: frequency width
- 1009:: predetermined ratio value

## Claims

1. A method for detecting an abnormality of an ultrasonic vibrator, comprising:
a first step of calculating a frequency characteristic of admittance of an ultrasonic vibrator;
a second step of calculating, based on the frequency characteristic of the admittance obtained in the first step, a resonance frequency at which the admittance is a maximum value and a frequency width at which a value at a predetermined ratio to the maximum value is obtained;
a third step of calculating sharpness based on the resonance frequency and the frequency width obtained in the second step; and
a fourth step of determining an abnormality of the ultrasonic vibrator based on the sharpness calculated in the third step.

2. The method for detecting an abnormality of an ultrasonic vibrator according to claim 1, wherein
the ratio is smaller than 1/√2 times.

3. The method for detecting an abnormality of an ultrasonic vibrator according to claim 1, wherein
the first step includes:
a step of applying a voltage, under which frequency sweeping is performed within a range of 1.500 MHz to 1.700 MHz, to an electrode of the ultrasonic vibrator;
a step of calculating impedance that is a ratio of the voltage to a measured current; and
a step of calculating admittance that is a reciprocal of the impedance.

4. The method for detecting an abnormality of an ultrasonic vibrator according to claim 1, wherein
it is determined that the ultrasonic vibrator is abnormal when the sharpness is unable to be calculated in the third step and when the sharpness calculated in the third step is smaller than a threshold.

5. The method for detecting an abnormality of an ultrasonic vibrator according to claim 1, wherein
in the second step, the plurality of frequency widths with different ratios are calculated,
in the third step, the sharpness is calculated for each of the plurality of frequency widths, and
in the fourth step, each value of the sharpness is compared with a threshold, and an abnormality of the ultrasonic vibrator is determined based on each comparison result.

6. An automatic analyzer, comprising:
a dispensing mechanism configured to dispense a specimen or a reagent into a reaction container;
a stirring mechanism configured to stir the specimen and the reagent in the reaction container; and
a cleaning mechanism configured to clean the dispensing mechanism, wherein
the stirring mechanism or the cleaning mechanism includes an ultrasonic vibrator, and
the method for detecting an abnormality of the ultrasonic vibrator according to claim 1 is executed.

7. An abnormality detector for detecting an abnormality of an ultrasonic vibration element by being connected to an electrode of an ultrasonic vibrator, wherein
the method for detecting an abnormality of the ultrasonic vibrator according to claim 1 is executed.

8. An abnormality detection system of an ultrasonic vibrator, comprising:
a measuring device configured to measure a frequency characteristic of impedance of the ultrasonic vibrator by being connected to an electrode of the ultrasonic vibrator; and
a computer configured to execute the method for detecting an abnormality of the ultrasonic vibrator according to claim 1 based on the frequency characteristic of the impedance transmitted from the measuring device.
